(19) Europäisches Patentamt
European Patent Office
Office européen des brevets

(11) **EP 3 500 460 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **17731806.0**

(22) Anmeldetag: **20.06.2017**

(51) Internationale Patentklassifikation (IPC):
**B60T 8/1766** *(2006.01)*

(52) Gemeinsame Patentklassifikation (CPC):
**B60T 8/1766**

(86) Internationale Anmeldenummer:
**PCT/EP2017/000710**

(87) Internationale Veröffentlichungsnummer:
**WO 2018/033228 (22.02.2018 Gazette 2018/08)**

(54) **VERFAHREN ZUM EINSTELLEN VON BREMSDRÜCKEN, BREMSANLAGE EINES KRAFTFAHRZEUGS ZUR DURCHFÜHRUNG DES VERFAHRENS SOWIE KRAFTFAHRZEUG MIT EINER SOLCHEN BREMSANLAGE**

METHOD FOR ADJUSTING BRAKE PRESSURES, BRAKE SYSTEM OF A MOTOR VEHICLE FOR CARRYING OUT THE METHOD, AND MOTOR VEHICLE COMPRISING SUCH A BRAKE SYSTEM

PROCÉDÉ DE RÉGLAGE DES PRESSIONS DE FREINAGE, SYSTÈME DE FREINAGE D'UN VÉHICULE À MOTEUR POUR LA MISE EN OEUVRE DE CE PROCÉDÉ ET VÉHICULE À MOTEUR DOTÉ D'UN TEL SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2016   DE 102016009996**

(43) Veröffentlichungstag der Anmeldung:
**26.06.2019   Patentblatt 2019/26**

(73) Patentinhaber: **ZF CV Systems Europe BV**
**1170 Brussels (BE)**

(72) Erfinder:
• **FLAUM, Nikolai**
**30457 Hannover (DE)**
• **NGUYEN, Van Tien**
**30519 Hannover (DE)**
• **WALLBAUM, Torsten**
**31089 Duingen (DE)**

(74) Vertreter: **Rabe, Dirk-Heinrich**
**ZF CV Systems Hannover GmbH**
**Am Lindener Hafen 21**
**30453 Hannover (DE)**

(56) Entgegenhaltungen:
EP-A2- 0 445 575     DE-A1- 3 829 951
DE-A1-102008 032 544

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Verfahren zum Einstellen von Bremsdrücken, Bremsanlage eines Kraftfahrzeugs zur Durchführung des Verfahrens sowie Kraftfahrzeug mit einer solchen Bremsanlage Die Erfindung betrifft ein Verfahren zum Betrieb einer elektronischen Bremsanlage eines Kraftfahrzeugs gemäß Anspruch 1. Die Erfindung betrifft außerdem gemäß Anspruch 6 eine elektronische Bremsanlage zur Durchführung des Verfahrens sowie gemäß Anspruch 7 ein Kraftfahrzeug mit einer solchen Bremsanlage.

Zum Abbremsen eines Kraftfahrzeugs werden die Räder des Kraftfahrzeugs gebremst.

Hierzu weisen Radbremsen der Räder jeweils Bremszylinder auf, welche über ein Arbeitsmedium, das heißt hydraulisch oder pneumatisch, betätigt werden. Bei Nutzfahrzeugen wird der gewünschte Bremsdruck in den Bremszylindern in der Regel pneumatisch erzeugt.

Elektronische Bremsanlagen, auch elektronisches Bremssystem (EBS) genannt, arbeiten mit elektrischen Steuersignalen zur Steuerung der Bremsanlage, welche von einer zentralen Bremssteuereinheit erzeugt werden. Die Bremssteuereinheit kommuniziert mit den einzelnen Bauteilen der elektronischen Bremsanlage. Der Druck an den Bremszylindern der Radbremsen wird entsprechend der Steuersignale generiert.

Über Drehzahlsensoren, die an den Rädern des Kraftfahrzeugs angeordnet sind, erhält die elektronische Bremsanlage laufend aktuelle Drehzahlmesswerte und damit aktuelle Informationen über die Radgeschwindigkeiten. Verschiedene integrierte Stabilitätsfunktionen, wie die Antiblockierfunktion, die Schleppmomentregelung oder die elektronische Stabilitätsregelung (ESC), erkennen Abweichungen vom normalen Fahrzustand und greifen bei Gefährdungen in das Fahrgeschehen ein.

Ferner können weitere Bremsenmanagementfunktionen wie beispielsweise die Verzögerungsregelung, die Bremskraftverteilung, die Bremsbelagverschleißregelung oder der Bremsassistent umgesetzt werden.

Die elektronische Bremssteuereinheit ist mit einem vom Fahrer des Kraftfahrzeugs betätigbaren Bremssignalgeber verbunden zum Empfang einer Fahrerbremsanforderung. Die Bremssteuereinheit ist außerdem zum Empfang externer Bremsanforderungen ausgebildet. Externe Bremsanforderungen sind von der Fahrerbremsanforderung unabhängig und werden beispielsweise von externen Fahrerassistenzsystemen der Bremssteuereinheit vorgegeben. Fahrerassistenzsysteme als von der Steuereinheit getrennt ausgeführte Systeme geben Bremsanforderungssignale, d.h. XBR-Botschaften („eXternal Brake Request"), entsprechend der gewünschten Bremsleistung an die Bremssteuereinheit der Bremsanlage aus, beispielsweise über einen Datenbus.

Bei bekannten elektronischen Bremsanlagen strebt die Bremssteuereinheit bei der Einstellung der Bremsdrücke an den einzelnen Radbremsen des Kraftfahrzeugs ein möglichst stabiles Fahrverhalten an. Dabei muss jederzeit, d.h. insbesondere bei unterschiedlichen Lasten und Beladungszuständen des Kraftfahrzeugs, der Bremsdruck an den Vorderrädern zu dem Bremsdruck an den Hinterrädern in einem derartigen Druckverteilungsverhältnis zueinander stehen, dass die Vorderachse vor der Hinterachse blockiert. Die Bremssteuereinheit stellt daher die Bremsdrücke an den Radbremsen unter Regelung eines Druckverteilungsverhältnisses der Bremsdrücke an den Radbremsen der Vorderachse zu den Bremsdrücken an den Radbremsen der Hinterachse des Kraftfahrzeugs ein und bestimmt entsprechende elektrische Steuersignale für die Aktuatoren der Bremsanlage. Oft werden Achsmodulatoren eingesetzt, denen die Bremssteuereinheit den von ihr bestimmten Sollwert des Bremsdrucks vorgibt.

Die Auswertung der aus den Drehzahlmesswerten ermittelten Radgeschwindigkeiten ergibt ein genaues Bild über den Schlupf jeder Achse. ist der Schlupf unterschiedlich, dann ist der Bremsdruck an Vorderachse und Hinterachse mittels Differenzschlupfregelung so zu regeln, dass die Bremskräfte in Bezug auf die Adhäsion optimal verteilt werden DE 38 29 951 A1 offenbart ein Verfahren zur Durchführung einer lastabhängigen Regelung des Bremsdrucks an einem Nutzfahrzeug mit einem elektrisch wirkenden Antiblockiersystem (ABS) mit elektronischer Zentralsteuerung und achsnahen ABS-Bremsventilen und Drehzahlgebern an den bremsbaren Rädern als Istwert-Geber für eine ABS-Regelung. Das bekannte Verfahren nutzt die Komponenten des vorhandenen Antiblockiersystems aus, um damit eine auch weit unterhalb der Blockiergrenze wirkende, automatisch-lastabhängige Bremsfunktion (ALB) zu realisieren. Bei dem bekannten Verfahren soll der Bremsdruck und damit die Bremskraftverteilung achsspezifisch unterhalb der Blockiergrenze geregelt werden, wobei eine zwischenachsige Bremsdruckverteilung allein nach Maßgabe der Auswertung der von den Drehzahlsensoren gelieferten Raddrehzahlsignalen in einem Schlupfbereich unterhalb des Bereichs, in dem die Antiblockierfunktion wirksam wird, automatisch geregelt wird. Die zwischenachsige Bremsdruckverteilung soll bei dem bekannten Verfahren von einem fahrzeugspezifisch abgespeicherten Startwert ausgehend nachgeführt werden.

Die Regelung einer optimalen Druckverteilung benötigt eine gewisse Zeit bis zum Erreichen des idealen Druckverteilungsverhältnisses. Während dieser Adaptionsphase ist die Wahrscheinlichkeit, dass eines oder mehrere der Räder zum Blockieren neigt, im praktischen Fahrbetrieb hoch. EP 0 445 575 A2 offenbart ein gattungsgemäßes Verfahren zur Berechnung einer optimalen Bremsdruckverteilung.

Ein weiteres Beispiel einer optimierten Bremsdruckverteilung ist in der DE 10 2008 032544 A1 offenbart.

Der vorliegenden Erfindung liegt die Aufgabe zugrunde, bei einer elektronischen Bremsanlage eine möglichst schnelle Einstellung der optimalen Bremsdruckverteilung durch eine Bremssteuereinheit zu ermöglichen.

Diese Aufgabe wird erfindungsgemäß durch ein Verfahren zum Betrieb einer elektronischen Bremsanlage mit den Merkmalen des Anspruchs 1 gelöst. Die Aufgabe wird außerdem gemäß Anspruch 6 durch eine Bremsanlage zur Durchführung des Verfahrens sowie gemäß Anspruch 7 durch ein Kraftfahrzeug mit einer solchen elektronischen Bremsanlage gelöst.

Gemäß der Erfindung wird in einem Fahrerbremsmodus mit ausschließlicher Fahrerbremsanforderung ein Startwert des Druckverteilungsverhältnisses (Druckverteilungsverhältnisstartwert) für eine Regelung ermittelt und für die spätere Berücksichtigung bei Beginn einer Bremsung abgespeichert und bereitgehalten, insbesondere für Bremsungen mit Umsetzung anderer oder weiterer Bremsanforderungen, beispielsweise externer Bremsanforderungen.. Der Einfluss des Beladungszustands des Nutzfahrzeugs auf das ideale Druckverteilungsverhältnis wird durch die Ermittlung des Startwertes des Druckverteilungsverhältnisses im Fahrerbremsmodus bereits berücksichtigt, so dass die Regelung auf einen bereits nahe am einzuregelnden Idealwert des Druckverteilungsverhältnisses aufsetzt. Der Druckverteilungsverhältnisstartwert stellt nämlich eine genaue Schätzung des idealen Bremsdruckverteilungsverhältnisses zur Verfügung, der als Druckverteilungsverhältnisstartwert der Regelung vorgegeben werden kann. In der Regel sind nur quantitativ geringe und meist wenige Regeleingriffe erforderlich, um ausgehend von dem erfindungsgemäß ermittelten Druckverteilungsverhältnisstartwert das ideale Druckverteilungsverhältnis einzustellen. Die Regelung des idealen Druckverteilungsverhältnisses erfolgt erfindungsgemäß über eine Regelung des Differenzschlupfs zwischen den Achsen.

Mit der Erfindung werden Druckverteilungsverhältnisstartwerte auch bei Kraftfahrzeugen mit mehr als zwei Achsen ermittelt, wobei vorzugsweise Achspaare von jeweils zwei Achsen betrachtet bzw. deren Druckverteilungsverhältnisse mit den erfindungsgemäß im Fahrerbremsmodus ermittelten Druckverteilungsverhältnisstartwert geregelt werden.

Die Ermittlung des Druckverteilungsverhältnisstartwerts im Fahrerbremsmodus ist mit wenig Information möglich. Gemäß der Erfindung werden die der Bremssteuereinheit zur Verfügung stehenden Drehzahlmesswerte der Räder zur Bestimmung des Druckverteilungsverhältnisstartwerts herangezogen. Der Druckverteilungsverhältnisstartwert wird dabei ermittelt, indem ein erster Drehzahlmesswert der Vorderachse und ein zweiter Drehzahlmesswert der Hinterachse erfasst werden, sowie ein Referenzwert einer Bewegungsgröße des Kraftfahrzeugs zum jeweils gleichen Messzeitpunkt ermittelt wird. Der Referenzwert kann dabei durch einen separaten Bewegungssensor des Kraftfahrzeugs erfasst oder durch Auswertungen der Drehzahlmesswerte der Achsen hergeleitet werden. Die Drehzahlmesswerte werden durch Drehzahlsensoren der jeweiligen Räder erfasst, welche der Bremssteuereinheit zugeleitet werden. Der erste Drehzahlmesswert der Vorderachse und der zweite Drehzahlmesswert der Hinterachse werden jeweils mit dem Referenzwert in einer dem Radschlupf an der jeweiligen Achse repräsentierenden Weise verknüpft. Auf diese Weise werden für jede Achse Schlupfwerte ermittelt, worunter sowohl der Radschlupf als auch andere physikalische Bewegungsgrößen verstanden werden, welche den Radschlupf bestimmen, beispielsweise die Geschwindigkeit oder die Beschleunigung.

Der so gebildete erste Schlupfwert bezüglich der Vorderachse und der zweite Schlupfwert bezüglich der Hinterachse werden in ein Verhältnis zueinander gesetzt und der so bestimmte Verteilungsindex mit einem vorgegebenen Druckverteilungsverhältnis verknüpft.

Erfindungsgemäß zieht die elektronische Bremsanlage einen dynamisch ermittelten Wert des Druckverteilungsverhältnisses zur Verknüpfung mit dem Verteilungsindex heran. Der ermittelte Wert des Druckverteilungsverhältnisses kann dabei ein aktueller Wert oder ein zuvor abgespeicherter Wert sein.

Entsprechend der Annahme des idealen Druckverteilungsverhältnisses, dass nämlich kein Differenzschlupf zwischen den betrachteten Achsen bestehen soll, werden die ersten Schlupfwerte und die zweiten Schlupfwerte im Verteilungsindex reziprok zum Bezug auf die Achsen im Druckverteilungsverhältnis berücksichtigt. Daraus ergibt sich bei Berücksichtigung des jeweiligen Radschlupfs als zu verarbeitenden Schlupfwerten der jeweiligen Achsen die folgende Gleichung zur Bestimmung des Druckverteilungsverhältnisstartwerts:

$$(P_{FA}/P_{RA}) = (\lambda_{RA}/\lambda_{FA}) * (P_{FA}/P_{RA})_{nonideal}$$

In der Gleichung sind die Bremsdrücke mit dem Formelzeichen "P" angegeben. Erste Schlupfwerte für die Vorderachse und zweite Schlupfwerte für die Hinterachse sind als jeweiliger Radschlupf ermittelt und in der Gleichung durch das Formelzeichen "$\lambda$" repräsentiert. Der Index "FA" steht in der Gleichung für eine der Vorderachse zugeordnete Größe. Entsprechend sind Größen, welche auf die Hinterachse bezogen sind, mit dem Index "RA" bezeichnet. Das dynamisch ermittelte Druckverteilungsverhältnis, welches als nicht ideal behandelt und erfindungsgemäß mit dem Verteilungsindex verknüpft wird, ist mit dem Index "nonideal" bezeichnet.

Vorteilhaft wird zur Bestimmung der Schlupfwerte für die jeweiligen Achsen aus dem ersten Drehzahlwert der Vorderachse und dem zweiten Drehzahlwert der Hinterachse eine translatorische Bewegungsgröße des Kraftfahrzeugs bestimmt und mit dem Referenzwert in derselben physikalischen Größe verknüpft. Wird in einer vorteilhaften Ausführungsform die Geschwindigkeit als Bewegungsgröße berücksichtigt, so werden aus den Drehzahlmesswerten der Achsen Geschwindigkeiten hergeleitet und auch der Referenzwert als Referenzgeschwindigkeit des Kraftfahrzeugs ermittelt.

Daraus ergibt sich für die Bestimmung des Druckverteilungsverhältnisstartwerts die folgende Gleichung:

$$(P_{FA}/P_{RA}) = ((v_{RA}-v_{Veh}) \, / \, (v_{FA}-v_{Veh})) \, * \, (P_{FA}/P_{RA})_{nonideal}$$

In der vorstehenden Gleichung ist die Geschwindigkeit mit dem Formelzeichen "v" bezeichnet. Der Index "Veh" bezeichnet dabei eine auf das Kraftfahrzeug bezogene Referenzgröße, das heißt hier die Referenzgeschwindigkeit des Kraftfahrzeugs.

In einer weiteren vorteilhaften Ausführungsform der Erfindung wird die Beschleunigung als Bewegungsgröße zur Ermittlung des Druckverteilungsverhältnisstartwerts berücksichtigt. Daraus ergibt sich die folgende Gleichung, bei der die Beschleunigung mit dem Formelzeichen "a" bezeichnet ist:

$$(P_{FA}/P_{RA}) = ((a_{RA}-a_{Veh}) \, / \, (a_{FA}-a_{Veh})) \, * \, (P_{FA}/P_{RA})_{nonideal}$$

Steht der Bremssteuereinheit kein Signal über die Fahrzeuggeschwindigkeit zur Verfügung, wird der Messwert eines Längsbeschleunigungssensors für die Ermittlung des Druckverteilungsverhältnisstartwerts herangezogen. Sollten auch Informationen über die Längsbeschleunigung nicht verfügbar sein, wird die Fahrzeuggeschwindigkeit als Referenzwert aus den einzelnen Drehzahlmesswerten der Räder hergeleitet, beispielsweise wird der höchste Geschwindigkeitswert der erfassten Räder während eines Bremsvorgangs in Bezug genommen als Referenzwert zur Ermittlung von Schlupfwerten.

Ausführungsbeispiele der Erfindung sind nachstehend anhand der Zeichnung näher erläutert. Es zeigen:

Fig. 1     ein pneumatisches und elektrisches Schema einer Elektronischen Bremsanlage eines Nutzfahrzeugs,

Fig. 2     ein Flussschaubild eines Ausführungsbeispiels eines Verfahrens zum Betrieb der Bremsanlage gemäß Fig. 1.

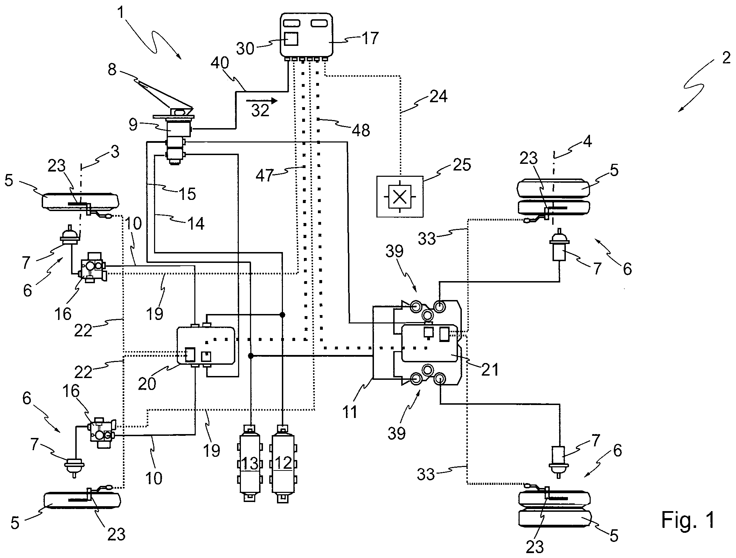

Fig. 1 zeigt ein elektrisch-pneumatisches Schema einer Elektronischen Bremsanlage 1 eines Kraftfahrzeugs 2, nämlich eines Nutzfahrzeugs. Elektrische Leitungen sind mit punktierten Linien und pneumatische Leitungen mit Volllinien dargestellt. Das Kraftfahrzeug 2 umfasst im gezeigten Ausführungsbeispiel zwei Achsen, nämlich eine in Fahrtrichtung vorn liegende Vorderachse 3 und eine Hinterachse 4, an denen jeweils beidseitig Räder 5 angeordnet sind. Zum Abbremsen des Kraftfahrzeugs 2 ist jedem Rad 5 eine Radbremse 6 zugeordnet. Die Radbremsen 6 sind pneumatisch betätigbar und weisen jeweils einen Bremszylinder 7 auf. Die Radbremsen 6 üben entsprechend dem jeweils im Bremszylinder 7 wirkenden pneumatischen Bremsdruck eine Bremskraft auf das sich drehende Rad 5 aus.

In der Fahrerkabine des Kraftfahrzeugs 2 ist ein Bremspedal 8 angeordnet, welches an einen Bremssignalgeber 9 gekoppelt ist. Der Bremssignalgeber 9 ist über eine Bremssignalleitung 40 mit einer elektronischen Bremssteuereinheit 17 der Bremsanlage verbunden. Bei Betätigung des Bremspedals 8 leitet der Bremssignalgeber 9 der Bremssteuereinheit 17 ein der Fahrerbremsanforderung 32 qualitativ entsprechendes Bremssignal zu.

Die Bremsanlage 1 weist im gezeigten Ausführungsbeispiel zwei Bremskreise auf, wobei ein erster Bremskreis 14 mit einem ersten Druckmittelvorrat 12 der Vorderachse 3 zugeordnet ist und ein zweiter Bremskreis 15 mit einem zweiten Druckmittelvorrat 13 der Hinterachse 4 zugeordnet ist.

Die Bremssteuereinheit 17 der elektronischen Bremsanlage 1 ist über elektrische Leitungen mit Aktuatormitteln verbunden, welche entsprechend der Ansteuerung durch die Bremssteuereinheit 17 Einfluss auf die Einstellung des Bremsdrucks an den Radbremsen 6 nehmen. Die Aktuatormittel der Bremsanlage 1 zur Einstellung des Bremsdrucks umfassen Achsmodulatoren 20, 21, welche den Bremsdruck auf beiden Seiten einer Achse steuern. Im gezeigten Ausführungsbeispiel umfasst die Bremsanlage 1 zwei Achsmodulatoren 20, 21. Ein vorderer Achsmodulator 20 ist dabei der Vorderachse 3 und dem ersten Bremskreis 14 zugeordnet. Er ist über eine CAN-Verbindung 47 mit der Bremssteuereinheit 17 verbunden. Ein hinterer Achsmodulator 21 ist der Hinterachse 4 und dem zweiten Bremskreis 15 zugeordnet. Er ist über eine CAN-Verbindung 48 mit der Bremssteuereinheit 17 verbunden.

Beide Achsmodulatoren 20, 21 sind signalübertragend mit den Drehzahlsensoren 23 der jeweiligen Achse 3, 4 verbunden. Im Betrieb der Bremsanlage 1 erfassen die Achsmodulatoren 20, 21 die Drehzahlmesswerte 22, 33 und senden sie gegebenenfalls nach Auswertung durch eine Elektronik über die CAN-Verbindung 47, 48 an die Bremssteuereinheit 17, welche daraufhin die Sollwerte der Bremsdrücke ermittelt und dem jeweiligen Achsmodulator 20, 21 zuleitet. Der einzustellende Bremsdruck wird dadurch von der Bremssteuereinheit 17 bestimmt, wobei die Bremssteuereinheit 17 über die CAN-Verbindungen 47, 48 die Drehzahlmesswerte 22 der Vorderachse 3 und die Drehzahlmesswerte 33 der Hinterachse 4 empfängt und auswertet.

Durch Auswertung der Drehzahlmesswerte 22, 33 schließt die Bremssteuereinheit 17 auf die Blockierneigung des jeweiligen Rades 5. Übersteigt nämlich die eingesteuerte Bremskraft die maximal übertragbare Bremskraft an einem oder mehreren Rädern, beginnen diese zu blockieren, wodurch das Kraftfahrzeug 2 instabil werden kann. Über die Drehzahlsensoren 23 überwacht die Antiblockierfunktion der Bremssteuereinheit 17 die Drehzahl jedes Rades 5.

Der hintere Achsmodulator 21 verfügt über zwei pneumatisch unabhängige Druckregelkreise mit jeweils einer Ventilanordnung 39, welche ein Einlassventil und ein Auslassventil umfassen. Bei Blockier- oder Durchdrehneigung modifiziert der hintere Achsmodulator 21 den von der Bremssteuereinheit 17 angeforderten Bremsdruck für die Hinterachse 4.

Den Radbremsen 6 der Vorderachse 3 ist jeweils ein Drucksteuerventil 16 zugeordnet, welche über Steuersignale 19 von der Bremssteuereinheit 17 einstellbar sind. Die Drucksteuerventile 16 sind jeweils eine Kombination von zwei Magnetventilen, nämlich einem Einlassventil und einem Auslassventil. Das Einlassventil dient dabei prinzipiell zur Druckerhöhung, beziehungsweise zum Halten des Drucks im Bremszylinder 7, während das Auslassventil zur Reduzierung des Bremsdrucks geöffnet wird und den jeweils angeschlossenen Bremszylinder 7 entlüftet. Eine Antiblockierfunktion der Bremsanlage 1 wird an der Vorderachse 3 über die Drucksteuerventile 16 umgesetzt und durch den Achsmodulator 20 der Vorderachse 3 unterstützt.

Die Bremssteuereinheit 17 ist zum Empfang einer Fahrerbremsanforderung 32 über den Bremssignalgeber 9 sowie zum Empfang externer Bremsanforderungen 26, beispielsweise von Fahrerassistenzsystemen des Kraftfahrzeugs 2 ausgebildet, um einen diesen Bremsanforderungen entsprechenden Bremsdruck an den Radbremsen einzustellen. Außerdem bestimmt die Bremssteuereinheit 17 den Bremsdruck an den Radbremsen 6 nach den Ergebnissen ihrer integrierten Bremsenmanagementfunktionen. Entsprechend den Stabilitätsfunktionen, beispielsweise einer Antiblockierfunktion, erkennt die Bremssteuereinheit 17 Abweichungen vom normalen Fahrzustand und greift bei Gefährdungen durch Einstellen des Bremsdrucks in das Fahrgeschehen ein.

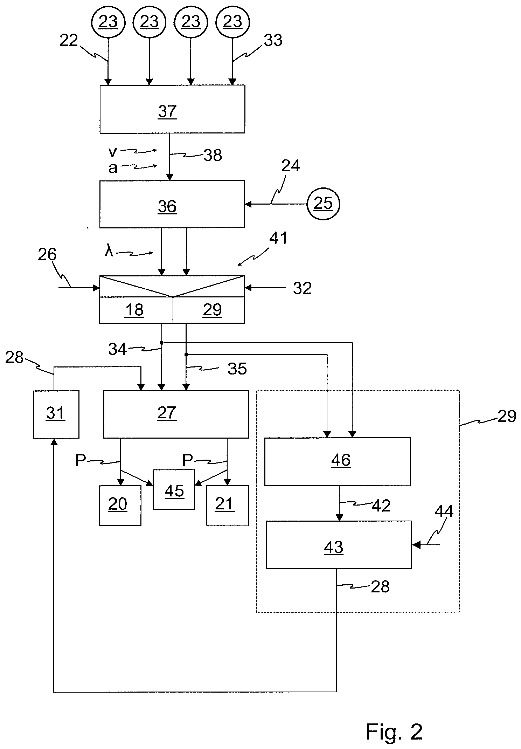

Unter der Antiblockierfunktion ist zu verstehen, dass die Bremssteuereinheit 17 über die erfassten Drehzahlmesswerte 22, 33 den Schlupf der Räder 5 überwacht und bei Feststellen einer Blockierneigung eingreift. Dabei wird eine aus den Drehzahlmesswerten 22, 33 ermittelte Bewegungsgröße (Bezugszeichen 38 in Fig. 2), beispielsweise die Radgeschwindigkeit, mit einem errechneten oder gemessenen Referenzwert 24 der entsprechenden Bewegungsgröße des Kraftfahrzeugs 2 zum jeweils gleichen Messzeitpunkt verglichen. Wird über den so ermittelten Radschlupf eine Blockierneigung des Rades 5 erkannt, das heißt eine vorgegebene Schlupfgrenze ist erreicht oder überschritten, verändert die Bremssteuereinheit17 die Einstellung des Bremsdrucks. Dabei erfolgt in einem ersten Schritt eine Senkung des Bremsdrucks, um anschließend den Bremsdruck des betreffenden Rades 5 entlang der Schlupfgrenze zu regeln. Im gezeigten Ausführungsbeispiel ist an dem Kraftfahrzeug 2 ein Längsbeschleunigungssensor 25 angeordnet, aus dessen Mess-signalen die Bremssteuereinheit 17 die gewünschten Referenzwerte 24 herleitet. Sollte eine geeignete Bewegungsgröße des Kraftfahrzeugs 2 von anderen Modulen der Bremsanlage 1 bekannt sein, so wird die entsprechende Information der Bremssteuereinheit 17 als Referenzwert 24 zur Schlupfermittlung vorgegeben.

Weitere Bremsmanagementfunktionen sind beispielsweise Verzögerungsregelung, Bremskraftverteilung, Bremsbelagverschleißregelung oder Bremsassistent.

Der Bremssteuereinheit 17 ist ein Speicherelement 30 zur Abspeicherung eines im Fahrerbremsmodus (Bezugszeichen 29 in Fig. 2) ermittelten Druckverteilungsverhältnisstartwertes zugeordnet, was nachstehend anhand von Fig. 2 erläutert ist. Jeweils gleichen Merkmalen sind in Fig. 2 die gleichen Bezugszeichen wie in Fig. 1 zugeordnet.

Fig. 2 zeigt in einem Flussschaubild ein Ausführungsbeispiel eines Verfahrens zum Betrieb der Elektronischen Bremsanlage, wobei die Bremssteuereinheit 17 die Bremsdrücke P an den Radbremsen unter Regelung 27 eines idealen Druckverteilungsverhältnisses 45 der Bremsdrücke P an den Radbremsen der Vorderachse zu den Bremsdrücken P an den Radbremsen der Hinterachse des Kraftfahrzeugs 2 bestimmt. Als ideales Druckverteilungsverhältnis wird dabei das Verhältnis der Bremsdrücke der Vorderachse zu den Bremsdrücken der Hinterachse angenommen, bei denen an den Rädern gleicher Radschlupf ermittelt wird.

Durch die Regelung 27 des Druckverteilungsverhältnisses 45 wird einem unerwünschten Eingreifen der Antiblockierfunktion vorgebeugt, welche solange ausgeschlossen ist oder so spät erfolgt, wie es aufgrund der gegebenen physikalischen Bedingungen tatsächlich möglich ist. Sämtliche Räder des Kraftfahrzeugs blockieren gleichzeitig oder nahezu gleichzeitig.

In einem Fahrerbremsmodus 29 setzt die Bremssteuereinheit 17 ausschließlich eine Fahrerbremsanforderung 32 um und stellt den Bremsdruck in den Bremszylindern 7 in Abhängigkeit der Stellung des Bremspedals 8 ein. Vom Fahrerbremsmodus 29 unterschiedlich ist ein Drucksteuermodus 18, wobei die Bremssteuereinheit 17 andere Bremsanforderungen als die Fahrerbremsanforderung 32 alternativ oder zusätzlich zur Fahrerbremsanforderung 32 umsetzt.

Die Regelung 27, deren Stellgröße die Werte der Bremsdrücke sind, berücksichtigt einen Druckverteilungsverhältnisstartwert 28 des Druckverteilungsverhältnisses, welcher im Fahrerbremsmodus 29 ermittelt wird und für die spätere Berücksichtigung im Drucksteuermodus 18 bereitgehalten wird. Der Bremssteuereinheit 17 ist ein Speicherelement 30 zur Abspeicherung 31 des im Fahrerbremsmodus 29 ermittelten Druckverteilungsverhältnisses zugeordnet, welches als Druckverteilungsverhältnisstartwert 28 für die Regelung 27 bei Beginn des Drucksteuermodus 18 ausgelesen wird.

Die Drehzahlmesswerte 22, 33 der Drehzahlsensoren 23 an den Rädern werden mit einem Referenzwert 24 einer Bewegungsgröße des Kraftfahrzeugs zum jeweils gleichen Messzeitpunkt in einer den Radschlupf repräsentierenden Weise verknüpft und Schlupfwerte für jedes Rad ermittelt, nämlich in dem Ausführungsbeispiel gemäß Fig. 2 der Radschlupf λ. Zur Verknüpfung 36 mit dem Referenzwert 24 werden in einer Auswertung 37 der Drehzahlmesswerte 22, 33 Bewegungsgrößen 38 ermittelt, welche der als Referenzwert 24 ausgewerteten Bewegungsgröße des Kraftfahrzeugs entsprechen.

Im Ausführungsbeispiel gemäß Fig. 2 wird die Geschwindigkeit v als Bewegungsgröße 38 berücksichtigt, wobei die Ermittlung des Radschlupfs λ gemäß der folgenden Formel erfolgt:

$$\lambda = (v - v_{Veh})/v_{Veh}$$

Anstelle der Geschwindigkeit v kann alternativ die Beschleunigung a als Bewegungsgröße 38 berücksichtigt werden.

Die Regelung 27 bestimmt Sollwerte für den jeweiligen Bremsdruck P an den Achsen und leitet den Aktoren der Bremsanlage, das heißt im Ausführungsbeispiel insbesondere den Achsmodulatoren (Bezugszeichen 20, 21 in Fig. 1) entsprechende Vorgaben zu. Alternativ oder zusätzlich beeinflusst die Bremssteuereinheit den Bremsdruck P über eine entsprechende Ansteuerung der Drucksteuerventile 16 mit Steuersignalen 19, soweit solche Ventile dem jeweiligen Rad des Kraftfahrzeugs 2 zugeordnet sind.

In einem Erfassungsschritt 41 erfasst die Bremssteuereinheit das Vorliegen von Bremsbedürfnissen, also neben den internen Bremsbedürfnissen der in die Bremssteuereinheit 17 integrierten Bremsmanagementfunktionen das Vorliegen einer Fahrerbremsanforderung 32 und/oder einer externen Bremsanforderung 26. Liegt ausschließlich eine Fahrerbremsanforderung 32, so betreibt die Bremssteuereinheit die Einstellung des Bremsdruck unter Regelung 27 des Druckverteilungsverhältnisses 45 im Fahrerbremsmodus 29.

Im Fahrerbremsmodus 29 wird ein Druckverteilungsverhältnisstartwert 28 für die Regelung 27 ermittelt, welcher durch Speicherung für eine spätere Berücksichtigung bei Bremsungen, insbesondere Bremsungen im Drucksteuermodus 18, bereitgehalten wird. Hiervon wird aus den Werten des Radschlupfs λ, welche während der Überwachung der Blockierneigung ermittelt werden, ein erster Schlupfwert 34 für die Vorderachse und ein zweiter Schlupfwert 35 für die Hinterachse herangezogen. Der erste Schlupfwert 34 für die Vorderachse kann einer der beiden zur Verfügung stehenden Werte des Radschlupfs λ sein oder ein Mittelwert der beiden Schlupfwerte für die Räder der Vorderachse sein. Entsprechend ist der zweite Schlupfwert 35 für die Hinterachse einer der beiden für die Antiblockierfunktion ermittelten Radschlüpfe λ oder ein Mittelwert aus beiden Werten.

Der erste Schlupfwert 34 und der zweite Schlupfwert 35 für das betrachtete Paar von Vorderachse und Hinterachse werden ins Verhältnis zueinander gesetzt 46 und so ein Verteilungsindex 42 bestimmt. Der Verteilungsindex 42 ist ein Faktor, welcher in einer Verknüpfung 43 mit einem vorgegebenen Druckverteilungsverhältnis 44 den Druckverteilungsverhältnisstartwert 28 für die Regelung 27 des Druckverteilungsverhältnisses 45 ergibt. Das vorgegebene Druckverteilungsverhältnis 44 ist der aktuell von der elektronischen Bremsanlage dynamisch ermittelte Wert des Druckverteilungsverhältnisses.

Der Verteilungsindex 42 korrespondiert mit dem Beladungszustand des Kraftfahrzeugs, so dass durch die Verknüpfung 43 mit dem vorgegebenen Wert des Druckverteilungsverhältnisses 44 ein tatsächliches Druckverteilungsverhältnis ermittelbar ist, welches erheblich näher am idealen Druckverteilungsverhältnis 45 des Kraftfahrzeugs 2 in der aktuellen Beladungssituation liegt.

Zur Bestimmung des Verteilungsindex 42 werden die ersten Schlupfwerte 34 für die Vorderachse und die zweiten Schlupfwerte 35 für die Hinterachse reziprok zum Bezug auf die jeweiligen Druckverhältnisse berücksichtigt. Dies entspricht der Annahme, dass im idealen Druckverteilungsverhältnis die Schlupfwerte 34, 35 der betrachteten Achsen des Kraftfahrzeugs 2 gleich sind, beziehungsweise kein Differenzschlupf vorliegt.

Die Ermittlung des Druckverteilungsverhältnisstartwerts 28, welcher dem Beginn der Regelung 27 zugrunde gelegt wird, wird vorteilhaft während des Fahrerbremsmodus 29 während vergleichsweise schwachen Fahrzeugverzögerungen, das heißt negativen Beschleunigungen von beispielsweise -1m/s² bis -1,5m/s² ermittelt, um dynamische Einflüsse zu verringern.

Die Einstellung des Bremsdrucks P in einem Drucksteuermodus 18 mit einer Regelung 27 unter Berücksichtigung eines im Fahrerbremsmodus 29 ermittelten Druckverteilungsverhältnisstartwerts 28 kann auch bei Kraftfahrzeugen mit mehreren Achsen verwendet werden. in weiteren Ausführungsbeispielen wird der abgespeicherte Druckverteilungsverhältnisstartwert 28 auch der Regelung 27 des Druckverteilungsverhältnisses 45 im Fahrerbremsmodus 29 zugrunde gelegt.

Bezugszeichenliste (Bestandteil der Beschreibung)

1. Bremsanlage
2. Kraftfahrzeug
3. Vorderachse
4. Hinterachse
5. Rad
6. Radbremse
7. Bremszylinder
8. Bremspedal
9. Bremssignalgeber
10. Bremsleitung
11. Bremsleitung
12. Druckmittelvorrat
13. Druckmittelvorrat
14. Erster Bremskreis
15. Zweiter Bremskreis
16. Drucksteuerventil
17. Bremssteuereinheit
18. Drucksteuermodus
19. Steuersignal
20. Druckmodulator Vorderachse
21. Druckmodulator Hinterachse
22. Erste Drehzahlmesswerte
23. Drehzahlsensor
24. Referenzwert
25. Längsbeschleunigungssensor
26. Externe Bremsanforderung
27. Regelung
28. Druckverteilungsverhältnisstartwert
29. Fahrerbremsmodus
30. Speicherelement
31. Abspeicherung
32. Fahrerbremsanforderung
33. Zweite Drehzahlmesswerte
34. Erster Schlupfwert
35. Zweiter Schlupfwert
36. Verknüpfung
37. Auswertung
38. Bewegungsgröße
39. Ventilanordnung
40. Bremssignalleitung
41. Erfassungsschritt
42. Verteilungsindex
43. Verknüpfen
44. Vorgegebenes Druckverteilungsverhältnis
45. Druckverteilungsverhältnis
46. Ins Verhältnis setzen
47. CAN-Verbindung
48. CAN-Verbindung
P Bremsdruck
λ Radschlupf
v Geschwindigkeit
a Beschleunigung

**Patentansprüche**

1. Verfahren zum Betrieb einer Elektronischen Bremsanlage für Kraftfahrzeuge, wobei eine Bremssteuereinheit den jeweiligen Bremsdruck (P) an Radbremsen (6) unter Regelung (27) eines Druckverteilungsverhältnisses (45) der Bremsdrücke (P) an den Radbremsen (6) der Vorderachse (3) zu den Bremsdrücken (P) an den Radbremsen (6) an einer Hinterachse (4) des Kraftfahrzeugs (2) bestimmt, wobei die Bremssteuereinheit (17) vom Fahrer des Kraftfahrzeugs (2) bestimmte Fahrerbremsanforderungen (32) und/oder externe Bremsanforderungen (26) empfängt und entsprechende Bremsdrücke bestimmt, wobei die Regelung (27) einen Druckverteilungsverhältnisstartwert (28) berücksichtigt, welcher in einem Fahrerbremsmodus (29) oder in einem Drucksteuermodus (18) ermittelt und für die spätere Berücksichtigung abgespeichert (31) und bereitgehalten wird, wobei der Druckverteilungsverhältnisstartwert (28) ermittelt wird, indem

- ein erster Drehzahlmesswert (22) der Vorderachse (3) und ein zweiter Drehzahlmesswert (33) der Hinterachse (4) erfasst sowie ein Referenzwert (24) einer Bewegungsgröße (38) des Kraftfahrzeugs (2) ermittelt wird, **dadurch gekennzeichnet dass**
- der Drehzahlmesswert (22) der Vorderachse (3) und der Drehzahlmesswert (33) der Hinterachse (4) jeweils mit dem Referenzwert (24) in einer den Radschlupf ($\lambda$) an der jeweiligen Achse (3, 4) repräsentierenden Weise verknüpft werden, die so gebildeten ersten Schlupfwerte (34) bezüglich der Vorderachse (3) und die zweiten Schlupfwerte (35) bezüglich der Hinterachse (4) in ein Verhältnis zueinander gesetzt (46) werden und der so bestimmte Verteilungsindex (42) mit einem vorgegebenen Druckverteilungsverhältnis (44) verknüpft (43) wird, und dass der Druckverteilungsverhältnisstartwert (28) nach folgender Gleichung bestimmt wird:

$$(P_{FA}/P_{RA}) = (\lambda_{RA}/\lambda_{FA}) * (P_{FA}/P_{RA})_{nonideal}.$$

wobei der Index "FA" bzw. "RA" in der Gleichung für eine der Vorderachse bzw. Hinterachse zugeordnete Druck- bzw. Schlupfgröße steht, und $(P_{FA}/P_{RA})_{nonideal}$ ein dynamisch ermitteltes Druckverteilungsverhältnis darstellt.

2. Verfahren nach Anspruch 1,
**dadurch gekennzeichnet, dass**
zur Bestimmung der Schlupfwerte (34, 35) aus dem ersten Drehzahlmesswert (22) der Vorderachse (3) und dem zweiten Drehzahlmesswert (33) der Hinterachse (4) eine der Bewegungsgröße (38) des Kraftfahrzeugs (2) entsprechende Bewegungsgröße (38) bestimmt und mit dem Referenzwert (24) verknüpft (36) wird.

3. Verfahren nach einem der vorhergehenden Ansprüche,
**gekennzeichnet durch**
die Berücksichtigung der Geschwindigkeit (v) als Bewegungsgröße (38).

4. Verfahren nach einem der Ansprüche 1 oder 2,
**gekennzeichnet durch**
die Berücksichtigung der Beschleunigung (a) als Bewegungsgröße (38).

5. Verfahren nach einem der vorhergehenden Ansprüche,
**dadurch gekennzeichnet, dass**
die Ermittlung des Druckverteilungsverhältnisstartwerts (28) für die Regelung (27) während Bremsungen mit Beschleunigungen (a) zwischen -1m/s$^2$ bis -1,5m/s$^2$ erfolgt.

6. Elektronische Bremsanlage (1) eines Kraftfahrzeugs (2) zur Durchführung des Verfahrens nach einem der Ansprüche 1 bis 5, mit pro Rad (5) einer Radbremse (6) und einem Drehzahlsensor (23), mit einer elektronischen Bremssteuereinheit (17) zur Bestimmung des Bremsdrucks (P) in den Radbremsen (6), welche zum Empfang einer Fahrerbremsanforderung (32) mit einem vom Fahrer des Kraftfahrzeugs betätigbaren Bremssignalgeber verbunden ist und zum Empfang externer Bremsanforderungen ausgebildet ist, wobei die Bremssteuereinheit (17)

- zum Empfang und Auswertung von Drehzahlmesswerten (22, 33) der Drehzahlsensoren (23) der Räder (5) ausgebildet ist,
- zur Regelung (27) eines idealen Druckverteilungsverhältnisses (45) des Bremsdrucks (P) an der Vorderachse (3) zu dem Bremsdruck (P) an einer Hinterachse (4) unter Berücksichtigung der Drehzahlmesswerte (22, 33) ausgebildet ist,
zur Ermittlung eines Druckverteilungsverhältnisstartwerts (28) für die Regelung (27) unter Heranziehung der Drehzahlmesswerte (22, 33) während eines Fahrerbremsmodus (29) oder eines Drucksteuermodus (18) ausgebildet ist, wobei der Druckverteilungsverhältnisstartwert (28) ermittelt wird, indem ein erster Drehzahlmesswert (22) der Vorderachse (3) und ein zweiter Drehzahlmesswert (33) der Hinterachse (4) erfasst sowie ein Referenzwert (24) einer Bewegungsgröße (38) des Kraftfahrzeugs (2) ermittelt wird, und der Drehzahlmesswert (22) der Vorderachse (3) und der Drehzahlmesswert (33) der Hinterachse (4) jeweils mit dem Referenzwert (24) in einer den Radschlupf (λ) an der jeweiligen Achse (3, 4) repräsentierenden Weise verknüpft werden, die so gebildeten ersten Schlupfwerte (34) bezüglich der Vorderachse (3) und die zweiten Schlupfwerte (35) bezüglich der Hinterachse (4) in ein Verhältnis zueinander gesetzt (46) werden und der so bestimmte Verteilungsindex (42) mit einem vorgegebenen Druckverteilungsverhältnis (44) verknüpft (43) wird, und wobei der Druckverteilungsverhältnisstartwert (28) nach der Gleichung

$$(P_{FA}/P_{RA}) = (\lambda_{RA}/\lambda_{FA}) * (P_{FA}/P_{RA})_{nonideal}$$

bestimmt wird, wobei der Index "FA" bzw. "RA" in der Gleichung für eine der Vorderachse bzw. Hinterachse zugeordnete Druck- bzw. Schlupfgröße steht, und $(P_{FA}/P_{RA})_{nonideal}$ ein dynamisch ermitteltes Druckverteilungsverhältnis darstellt, und

- ein Speicherelement (30) zur Abspeicherung (31) des Druckverteilungsverhältnisstartwerts (28) für die Regelung (27) des idealen Druckverteilungsverhältnisses (45) aufweist.

7.  Kraftfahrzeug mit einer Bremsanlage (1) nach Anspruch 6, zur Durchführung eines Verfahrens nach einem der Ansprüche 1 bis 5.

**Claims**

1.  Method for operating an electronic brake system for motor vehicles,
a brake control unit defining the respective brake pressure (P) at wheel brakes (6) by controlling (27) a pressure distribution ratio (45) of the brake pressures (P) at the wheel brakes (6) of the front axle (3) to the brake pressures (P) at the wheel brakes (6) of a rear axle (4) of the motor vehicle (2), the brake control unit (17) receiving from the driver of the motor vehicle (2) defined driver brake requests (32) and/or external brake requests (26) and defining corresponding brake pressures, the control (27) taking into account a pressure distribution ratio starting value (28), which is determined in a driver braking mode (29) or in a pressure control mode (18) and is stored (31) and kept available for later consideration, the pressure distribution ratio starting value (28) being determined by

- a first rotational speed measured value (22) of the front axle (3) and a second rotational speed measured value (33) of the rear axle (4) being detected and a reference value (24) of a movement variable (38) of the motor vehicle (2) being determined, **characterized in that**
- the rotational speed measured value (22) of the front axle (3) and the rotational speed measured value (33) of the rear axle (4) are each linked to the reference value (24) in a manner representing the wheel slip (λ) at the respective axle (3, 4), the first slip values (34) formed in this way are set (46) in relation to one another with respect to the front axle (3) and the second slip values (35) in relation to one another with respect to the rear axle (4), and the distribution index (42) defined in this way is linked (43) to a predetermined pressure distribution ratio (44), and **in that** the pressure distribution ratio starting value (28) is defined according to the following equation: $(P_{FA}/P_{RA}) = (\lambda_{RA}/\lambda_{FA}) * (P_{FA}/P_{RA})$nonideal, the index "FA" or "RA" in the equation representing a pressure or slip variable assigned to the front axle or rear axle, and $(P_{FA}/P_{RA})_{nonideal}$ representing a dynamically determined pressure distribution ratio.

2.  Method according to claim 1,
**characterized in that,**
to define the slip values (34, 35) from the first rotational speed measured value (22) of the front axle (3) and the second rotational speed measured value (33) of the rear axle (4), a movement variable (38) corresponding to the movement variable (38) of the motor vehicle (2) is defined and linked (36) to the reference value (24).

3.  Method according to either of the preceding claims,
**characterized by**
taking into account the speed (v) as a movement variable (38).

4.  Method according to either of claims 1 or 2,
**characterized by**
taking into account the acceleration (a) as a movement variable (38).

**5.** Method according to any of the preceding claims,
**characterized in that**
the determination of the pressure distribution ratio starting value (28) for the controlling (27) takes place during braking with accelerations (a) between -1 m/s$^2$ to -1.5 m/s$^2$.

**6.** Electronic brake system (1) of a motor vehicle (2) for carrying out the method according to any of claims 1 to 5, comprising a wheel brake (6) and a rotational speed sensor (23) for each wheel (5), comprising an electronic brake control unit (17) for defining the brake pressure (P) in the wheel brakes (6), which electronic brake control unit is connected to a brake signal generator that can be actuated by the driver of the motor vehicle in order to receive a driver brake request (32) and is designed to receive external brake requests, wherein the brake control unit (17)

- is designed to receive and evaluate rotational speed measured values (22, 33) of the rotational speed sensors (23) of the wheels (5),
- is designed to control (27) an ideal pressure distribution ratio (45) of the brake pressure (P) at the front axle (3) to the brake pressure (P) at a rear axle (4) taking into account the rotational speed measured values (22, 33), is designed to determine a pressure distribution ratio start value (28) for the control (27) using the rotational speed measured values (22, 33) during a driver braking mode (29) or a pressure control mode (18), wherein the pressure distribution ratio starting value (28) is determined by detecting a first rotational speed measured value (22) of the front axle (3) and a second rotational speed measured value (33) of the rear axle (4) and determining a reference value (24) of a movement variable (38) of the motor vehicle (2), and the rotational speed measured value (22) of the front axle (3) and the rotational speed measured value (33) of the rear axle (4) are each linked to the reference value (24) in a manner representing the wheel slip (λ) at the respective axle (3, 4), the first slip values (34) formed in this way are set (46) in a ratio to one another with respect to the front axle (3) and the second slip values (35) in a ratio to one another with respect to the rear axle (4) in a ratio to one another and the distribution index (42) defined in this way is linked (43) to a predetermined pressure distribution ratio (44), and wherein the pressure distribution ratio starting value (28) is defined according to the equation

$$(P_{FA}/P_{RA}) = (\Lambda_{RA}/\Lambda_{FA}) * (P_{FA}/P_{RA})_{nonideal}$$

wherein the index "FA" or "RA" in the equation represents a pressure or slip variable assigned to the front axle or rear axle, and $(P_{FA}/P_{RA})_{nonideal}$ represents a dynamically determined pressure distribution ratio, and
- a storage element (30) for storing (31) the pressure distribution ratio start value (28) for the control (27) of the ideal pressure distribution ratio (45).

**7.** Motor vehicle comprising a brake system (1) according to claim 6 for carrying out a method according to any of claims 1 to 5.

**Revendications**

**1.** Procédé permettant de faire fonctionner un système de freinage électronique destiné à des véhicules automobiles, dans lequel
une unité de commande de freinage détermine la pression de freinage (P) respective sur des freins de roue (6) en régulant (27) un rapport de répartition de pression (45) des pressions de freinage (P) sur les freins de roue (6) de l'essieu avant (3) aux pressions de freinage (P) sur les freins de roue (6) au niveau d'un essieu arrière (4) du véhicule automobile (2), dans lequel l'unité de commande de freinage (17) reçoit, en provenance du conducteur du véhicule automobile (2), des demandes de freinage de conducteur (32) déterminées et/ou des demandes de freinage externes (26) et détermine des pressions de freinage correspondantes, dans lequel la régulation (27) prend en compte une valeur de départ de rapport de répartition de pression (28) qui est définie dans un mode de freinage de conducteur (29) ou dans un mode de commande de pression (18) et est mémorisée (31) et conservée pour une prise en compte ultérieure, dans lequel la valeur de départ de rapport de répartition de pression (28) est définie par

- la détection d'une première valeur mesurée de vitesse de rotation (22) de l'essieu avant (3) et d'une seconde valeur mesurée de vitesse de rotation (33) de l'essieu arrière (4) et la définition d'une valeur de référence (24) d'une grandeur de mouvement (38) du véhicule automobile (2), **caractérisé en ce que**
- la valeur mesurée de vitesse de rotation (22) de l'essieu avant (3) et la valeur mesurée de vitesse de rotation (33) de l'essieu arrière (4) sont respectivement liées à la valeur de référence (24) de manière à représenter le patinage de roue ($\lambda$) sur l'essieu (3, 4) respectif, les premières valeurs de patinage (34) ainsi formées par rapport à l'essieu avant (3) et les secondes valeurs de patinage (35) par rapport à l'essieu arrière (4) sont mises en rapport l'une avec l'autre (46) et l'indice de répartition (42) ainsi déterminé est lié (43) à un rapport de répartition de pression (44) prédéfini, **et en ce que** la valeur de départ de rapport de répartition de pression (28) est déterminée selon l'équation suivante : $(P_{FA}/P_{RA}) = (\lambda_{RA}/\lambda_{FA}) * (P_{FA}/P_{RA})_{nonideal}$, où l'indice « FA » ou « RA » dans l'équation représente une grandeur de pression ou de patinage associée à l'essieu avant ou à l'essieu arrière et $(P_{FA}/P_{RA})_{nonideal}$ représente un rapport de répartition de pression défini dynamiquement.

2. Procédé selon la revendication 1,
   **caractérisé en ce que**
   pour la détermination des valeurs de patinage (34, 35) à partir de la première valeur mesurée de vitesse de rotation (22) de l'essieu avant (3) et de la seconde valeur mesurée de vitesse de rotation (33) de l'essieu arrière (4), une grandeur de mouvement (38) correspondant à la grandeur de mouvement (38) du véhicule automobile (2) est déterminée et liée (36) à la valeur de référence (24).

3. Procédé selon l'une des revendications précédentes,
   **caractérisé par**
   la prise en compte de la vitesse (v) comme grandeur de mouvement (38).

4. Procédé selon l'une des revendications 1 ou 2,
   **caractérisé par**
   la prise en compte de l'accélération (a) comme grandeur de mouvement (38).

5. Procédé selon l'une des revendications précédentes,
   **caractérisé en ce que**
   la définition de la valeur de départ de rapport de répartition de pression (28) pour la régulation (27) est effectuée pendant des freinages avec des accélérations (a) comprises entre -1 m/s$^2$ à -1,5 m/s$^2$.

6. Système de freinage (1) électronique d'un véhicule automobile (2) pour la mise en oeuvre du procédé selon l'une des revendications 1 à 5, comportant, par roue (5), un frein de roue (6) et un capteur de vitesse de rotation (23), comportant une unité de commande de freinage (17) électronique pour la détermination de la pression de freinage (P) dans les freins de roue (6), laquelle unité est connectée à un générateur de signaux de freinage pouvant être actionné par le conducteur du véhicule automobile pour la réception d'une demande de freinage de conducteur (32) et est configurée pour la réception de demandes de freinage externes, dans lequel l'unité de commande de freinage (17)

   - est configurée pour la réception et l'évaluation de valeurs mesurées de vitesse de rotation (22, 33) des capteurs de vitesse de rotation (23) des roues (5),
   - est configurée pour la régulation (27) d'un rapport de répartition de pression (45) idéal de la pression de freinage (P) sur l'essieu avant (3) à la pression de freinage (P) sur un essieu arrière (4) en prenant en compte les valeurs mesurées de vitesse de rotation (22, 33),
   est configurée pour la définition d'une valeur de départ de rapport de répartition de pression (28) pour la régulation (27) en utilisant les valeurs mesurées de vitesse de rotation (22, 33) pendant un mode de freinage de conducteur (29) ou un mode de commande de pression (18), dans lequel la valeur de départ de rapport de répartition de pression (28) est définie en détectant une première valeur mesurée de vitesse de rotation (22) de l'essieu avant (3) et une seconde valeur mesurée de vitesse de rotation (33) de l'essieu arrière (4) et en définissant une valeur de référence (24) d'une grandeur de mouvement (38) du véhicule automobile (2), et la valeur mesurée de vitesse de rotation (22) de l'essieu avant (3) et la valeur mesurée de vitesse de rotation (33) de l'essieu arrière (4) sont respectivement liées à la valeur de référence (24) de manière à représenter le patinage de roue ($\lambda$) sur l'essieu (3, 4) respectif, les premières valeurs de patinage (34) ainsi formées par rapport à l'essieu avant (3) et les secondes valeurs de patinage (35) par rapport à l'essieu arrière (4) sont mises en rapport l'une avec l'autre (46) et l'indice de répartition (42) ainsi déterminé est lié (43) à un rapport de répartition de pression (44) prédéfini, et dans lequel la valeur de départ de rapport de répartition de pression (28) est déterminée selon l'équation

$$(P_{FA}/P_{RA}) = (\Lambda_{RA}/\Lambda_{FA}) * (P_{FA}/P_{RA})_{nonideal}$$

où l'indice « FA » ou « RA » dans l'équation représente une grandeur de pression ou de patinage associée à l'essieu avant ou à l'essieu arrière et $(P_{FA}/P_{RA})_{nonideal}$ représente un rapport de répartition de pression défini dynamiquement, et

- présente un élément de stockage (30) pour le stockage (31) de la valeur de départ de rapport de répartition de pression (28) pour la régulation (27) du rapport de répartition de pression (45) idéal.

7. Véhicule automobile comportant un système de freinage (1) selon la revendication 6, pour la mise en oeuvre d'un procédé selon l'une des revendications 1 à 5.

Fig. 1

EP 3 500 460 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3829951 A1
- EP 0445575 A2
- DE 102008032544 A1